Europäisches Patentamt

European Patent Office

Office européen des brevets

(19)

(11) **EP 0 613 573 B1**

(12) **EUROPÄISCHE PATENTSCHRIFT**

(45) Veröffentlichungstag und Bekanntmachung des Hinweises auf die Patenterteilung:
**23.07.1997 Patentblatt 1997/30**

(51) Int Cl.⁶: **G05B 19/401**

(86) Internationale Anmeldenummer:
**PCT/DE93/00841**

(21) Anmeldenummer: **93918978.3**

(22) Anmeldetag: **11.09.1993**

(87) Internationale Veröffentlichungsnummer:
**WO 94/07187 (31.03.1994 Gazette 1994/08)**

(54) **VERFAHREN ZUR ÜBERPRÜFUNG DER ARBEITSGENAUIGKEIT EINER NC-MASCHINE**

PROCESS FOR TESTING THE WORKING ACCURACY OF AN NC MACHINE

PROCEDE PERMETTANT DE VERIFIER LA PRECISION D'UNE MACHINE A COMMANDE NUMERIQUE

(84) Benannte Vertragsstaaten:
**CH DE GB IT LI**

(30) Priorität: **22.09.1992 DE 4231613**

(43) Veröffentlichungstag der Anmeldung:
**07.09.1994 Patentblatt 1994/36**

(73) Patentinhaber: **ROBERT BOSCH GMBH**
**70442 Stuttgart (DE)**

(72) Erfinder:
• **BARG, Juergen**
**D-64720 Michelstadt (DE)**
• **WITKA, Waltraud**
**D-64720 Michelstadt (DE)**
• **GRIMM, Wolfgang**
**D-64720 Michelstadt (DE)**

(56) Entgegenhaltungen:
EP-A- 0 000 261          EP-A- 0 258 471
EP-A- 0 429 857          WO-A-92/09021
DE-A- 4 021 603

**Beschreibung**

Stand der Technik

Die Erfindung geht aus von einem Verfahren nach der Gattung des Hauptanspruchs. Zur Erfassung der Arbeitsgenauigkeit von NC-Maschinen wurde der sogenannte Kreisformtest entwickelt. Bei diesem Testverfahren wird eine von der NC-Maschine ausgeführte Kreisbahn mit einer vorgegebenen Referenzkreisbahn verglichen. Ein Verfahren dieser Art ist z. B. in "Der Kreisform-Test zur Prüfung von NC-Werkzeugmaschinen", W. Knapp, S. Hrovat, 1986, Seiten 19 bis 25, beschrieben. Gemäß dieser Schrift besteht der Kreisformtest in einem Vergleich einer Kreisbahn, die von einer NC-Maschine abgefahren wird, mit einem Kreis, der durch ein hochgenaues Referenzwerkstück, dem Kreisnormal, mit bekanntem Durchmesser vorgegeben wird. Zur Durchführung des Tests wird der Steuerung der NC-Maschine eine dem Kreisnormal entsprechende Kreisbahn programmiert und mit der durch einen zweidimensionalen Taster ermittelten Ist-Kontur der von der NC-Maschine tatsächlich ausgeführten Kreisbahn verglichen. Die Differenz wird grafisch und/oder numerisch dargestellt. Aufgrund der bei einem Kreisformtest gefundenen Bahnabweichung lassen sich die Einhaltung der Toleranzen der NC-Maschine überprüfen sowie Aussagen über die möglichen Ursachen von Abweichungen gewinnen.

Eine ausführliche Darstellung, wie die mit dem Kreisformtest gewonnenen Ergebnisse auszuwerten sind, findet sich ebenfalls in der Schrift von Knapp/Hrovat.

Ein anderes Prinzip zur Durchführung des Kreisformtests ist aus dem Prospekt der Fa. RENISHAW von 1991, "Das neue PC-gestützte Meßsystem zur Überprüfung von Bearbeitungszentren" bekannt. Bei dieser Anordnung wird ein längenveränderbarer Meßstab mit einem Ende in der Mitte eines von der Maschine abzufahrenden Kreises und mit dem anderen Ende an der Spindel der Maschine befestigt. Die beim Durchfahren des Kreises auftretenden Längenänderungen am Meßstab werden zur Anzeige gebracht.

Nachteilig an diesen bekannten Verfahren ist insbesondere der große Zeitaufwand, der zur Justierung der mechanischen Anordnungen erforderlich ist. Dies gilt insbesondere für die Justierung des Kreisnormals bei dem Verfahren nach Knapp/Hrovat. Das Verfahren nach RENISHAW ist zwar schneller durchführbar, jedoch weist das Meßsystem selbst zwei Gelenke auf, welche eine zusätzliche Fehlerquelle darstellen können, und deshalb auf Kosten der Genauigkeit gehen.

Aus der EP-A-0 510 204 ist weiterhin der Vorschlag bekannt, zur Überprüfung der Arbeitsgenauigkeit einer NC-Maschine die Durchführung eines Kreisformtestes mit nachfolgendem Vergleich zwischen Soll- und Istkreisbahn einzusetzen, wobei die Ist-Kreisbahn mit Hilfe von innerhalb des Servoregelsystems ohnehin vorhandenen Rückführungspulsen ermittelt wird. Gegenübergestellt werden jeweils zu gleichen Zeitpunkten aufgenommene Soll- und Istpositionen. Das auf diese Weise gewonnene Ergebnis läßt allerdings nur eine allgemeine qualitative Beurteilung der Arbeitsgenauigkeit der betreffenden Maschine zu, weil es den Schleppfehler zwischen Soll- und Istposition nicht berücksichtigt, und die erhaltenen Istpositionen deshalb nicht den sie tatsächlich erzeugenden Sollpositionen entsprechen.

Aus der EP-A-0 000 261 ist weiterhin das Konzept einer Geschwindigkeitsvorsteuerung im Zusammenhang mit Lageregelungen entnehmbar. Ziel des Vorschlages ist allerdings nur die örtliche Verbesserung der Genauigkeit einer Lageregelung. Die Verwendung einer Geschwindigkeitsvorsteuerung im Zusammenhang mit der Prüfung der Genauigkeit einer Lageregelung ist in der Schrift nicht offenbart.

Es ist Aufgabe der vorliegenden Erfindung, ein Kreisformtestverfahren anzugeben, das einfach durchführbar ist und eine eindeutige zeitliche Zuordnung von Soll- und Istpositionen ermöglicht.

Diese Aufgabe wird gelöst durch ein Verfahren mit den Merkmalen des Hauptanspruchs. Das erfindungsgemäße Verfahren hat den Vorteil, daß eine zusätzliche externe Meßeinrichtung nicht erforderlich ist. Es ist sowohl einfach wie auch schnell und dadurch beliebig häufig durchführbar.

In einer besonderen Ausgestaltung wird das erfindungsgemäße Verfahren in Ergänzung mit einem der vorstehend beschriebenen bekannten Verfahren durchgeführt. Auf diese Weise ist eine besonders genaue Analyse der Maschinenarbeitsgenauigkeit erreichbar.

Ein Ausführungsbeispiel des erfindungsgemäßen Verfahrens wird in der nachfolgenden Beschreibung anhand der Zeichnung näher erläutert.

Zeichnung

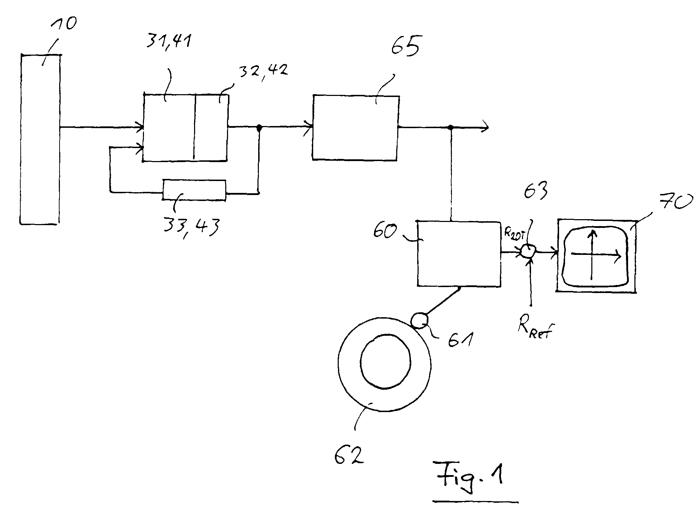

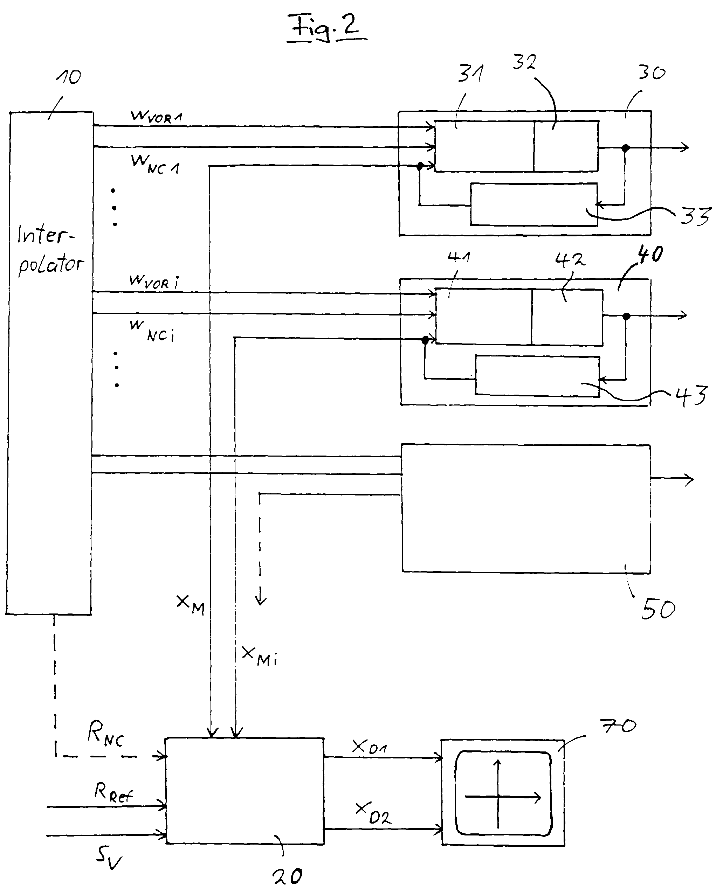

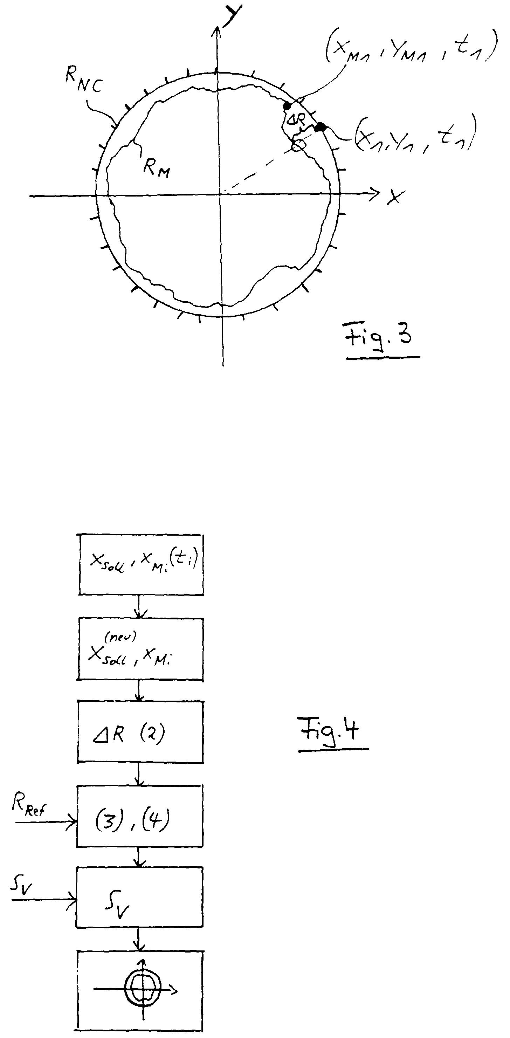

Figur 1 zeigt ein Blockschaltbild eines bekannten Kreisformtests, Figur 2 ein Blockschaltbild des erfindungsgemäßen Verfahrens, Figur 3 eine grafische Darstellung der mit dem Kreisformtest erzielbaren Ergebnisse, Figur 4 die Struktur eines Verfahrens zur Durchführung des vorgeschlagenen Kreisformtests.

Beschreibung

Eine vereinfachte Darstellung einer zur Durchführung des erfindungsgemäßen Verfahrens geeigneten Anordnung zeigt Figur 2. Dargestellt ist ein Teil der Steuerung einer nicht weiter dargestellten mehrachsigen NC-Maschine, das vorgeschlagene Verfahren ist aber grundsätzlich für alle Maschinenarten, sowie ebenso z. B. auch für Roboter geeignet. Bei der Steuerung handelt es sich um eine übliche Steuerung, deren Aufbau und Funktion bekannt sind. In der Figur 2 sind deshalb nur die nachfolgend zu Beschreibungszwecken benötigten Elemente der gesamten Steuerung dargestellt.

Ein Interpolator 10 generiert definitionsgemäß und in bekannter Weise zu den von einer Satzaufbereitung kommenden Stützpunkten einer Bewegungssollbahn Zwischenstützstellen. Ausgangssignal des Interpolators 10 ist eine vektorielle Führungsgröße $\vec{r}_{NC}$ zur Führung von wenigstens zwei Schlitten der Maschine entlang einer kreisförmigen Sollbewegungsbahn $R_{NC}$. Die Komponenten der Führungsgröße $\vec{r}_{NC}$ sind Lageführungssignale $w_{NC1}$, $w_{NC2}$,..., $w_{NCi}$,... für nachgeschaltete Servoregelkreise 30,40,50 zur Steuerung der einzelnen Achsen.

Weiter verfügt der Interpolator 10 über eine nicht dargestellte Vorsteuereinrichtung. Diese bildet zu den vom Interpolator 10 ausgegebenen Lageführungssignalen $w_{NC1}$, $w_{NC2}$,..., $w_{NCi}$,... Vorsteuersignale $w_{vor1}$, $w_{vor2}$,..., $w_{vori}$,... welche gleichfalls auf die nachgeschalteten, jeweils aus Antrieb 31,41, Schlitten 32, 42, sowie Wegmeßsystem 33,34 bestehenden Servoregelkreise 30, 40, 50 aufgeschaltet werden. Vorgesteuert werden zweckmäßig zumindest die erste und die zweite Zeitableitung, sptich Führungsgeschwindigkeit und Führunbgsbeschleunigung, der vom Interpolator 10 ausgegebenen Lageführungssignale $w_{NC}$, $w_{NC2}$,..., $w_{NCi}$,... Zwar ist eine Vorsteuerreinrichtung nicht unbedingt erforderlich, verbessert aber die mit dem Kreisformtest gewonnenen Ergebnisse erheblich. Eine Darstellung des Prinzips der Vorsteuerung findet sich z.B. in der Schrift P. Stoph, "Verminderung dynamischer Bahnabweichungen bei numerisch bahngesteuerten Werkzeugmaschinen", Zeitschrift für industrielle Fertigung, 1978, Seiten 329 bis 333.Ein Verfahren, wie die zur Durchführung der Vorsteuerung benötigten sogenannten Vorsteuerparameter gewonnen werden können, ist aus der deutschen Anmeldung Aktenzeichen P 40 39 620.7 bekannt.

Dem Interpolator 10 nachgeschaltet sind entsprechend der Anzahl der Achsen der betrachteten Maschine mehrere, zumindest aber zwei, Servoregelkreise 30, 40, 50, von denen aus Gründen der Übersichtlichkeit in Figur 2 nur drei dargestellt sind, es können jedoch mehr als drei vorhanden sein. Alle Servoregelkreise 30,40,50 sind prinzipiell gleichartig aufgebaut und bestehen jeweils aus einem Achsantrieb 31,41 mit einer nicht dargestellten Regelvorrichtung, der gemäß dem vom Interpolator 10 vorgegebenen Lageführungssignal einen Schlitten 32,42 entlang einer im allgemeinen linearen Achse steuert. Die auf einer Istbahn $R_M$ liegenden Istpositionen $x_{M1}$, $x_{M2}$,..., $x_{Mi}$,... der Schlitten 32,42 bezüglich eines maschinenfesten Referenzpunktes werden von einem Wegmeßsystem 33,43 achsweise erfaßt und dem Achsantrieb 31,41 zurückgeführt. Die Wegmeßsysteme 33,43 sind zweckmäßig Längenmaßstäbe für eine direkte Längenmessung, die orthogonal zueinander angeordnet sind und optisch abgetastet werden. Wegmeßsysteme dieser Art sowie deren Funktionsweise sind z.B. in der Zeitschrift "Konstruktion", 43, 1991, S. 401 bis 410 beschrieben.

Wenigstens zwei der Achsantriebe 31, 41 wirken auf zueinander orthogonale Achsen, welche eine Ebene aufspannen. Aufgrund der von wenigstens zwei Achsantrieben 31 , 41 bewirkten Bewegung werden die zugeordneten Schlitten 32, 42 entlang der betreffenden Achsen derart bewegt, daß ihre Relativbewegung der vom Interpolator 10 als Führungsgröße $\vec{r}_{NC}$ vorgegebenen Sollbahn $R_{NC}$ entspricht. Unerheblich ist, welche Schlitten 32, 42 bewegt werden. Auch kann die Bewegung der Schlitten 35, 36 von jeweils mehr als einem Achsantrieb gesteuert sein und entlang mehr als drei Achsen erfolgen. Entscheidend ist die Relativbewegung der Schlitten 35 und 36 zueinander.

Die vom Wegmeßsystem 31,41 erfaßten Schlittenpositionen $x_{M1}$, $x_{M2}$,..., $x_{Mi}$,... werden weiterhin einer Diagnoseeinheit 20 zugeführt. Der Diagnoseeinrichtung 20 sind außerdem ein Signal der Sollkreisbahn $R_{NC}$, welche durch das Führungsgrößensignal $w_{NC}$ bestimmt ist, ein Referenzsignal $R_{Ref}$, sowie ein Signal $S_V$ zur Skalierung zugeführt. Das Ausgangssignal der Diagnoseeinheit 20, welches zweckmäßig aus zwei zueinander orthogonalen Informationspfaden $x_{D1}$, $x_{D2}$ besteht, ist einer Anzeigeeinheit 70, vorzugsweise in Form eines Bildschirmes, zugeführt.

Figur 1 zeigt eine nach dem Stand der Technik bekannte Meßanordnung mit Kreisnormal und Taster, wie sie beispielsweise aus der Schrift von Knapp/Hrovat hervorgeht. Bereits anhand von Figur 2 beschriebene Elemente sind mit denselben Bezugszeichen versehen. Außer einem Wegmeßsystem 33,43 weist die Anordnung nach Figur 1 insbesondere einen 2-D-Taster, im wesentlichen bestehend aus einem Tastkopf 60 und einer Meßspitze 61, welche mechanisch miteinander verbunden sind, auf. Der 2-D-Taster ist mechanisch mit wenigstens einem der Schlitten 32, 42 verbunden, was durch ein Mechanikglied 65 berücksichtig ist. Während der Meßkopf 60 entsprechend der von der Steuerung vorgegebenen Soll-Kreisbahn $R_{NC}$ bewegt wird, wird die Meßspitze 61 entlang einem als Kreisnormal ausgebildeten ringförmigen Meßkörper 62 auf einer durch diesen physikalisch definierten Bahn geführt. Dabei wird mit Blick auf die spätere Auswertung der Meßergebnisse zwischen einer Abtastung an der Innenseite des Kreisnormals 62, dem Innennormal, und der Außenseite des Kreisnormals, dem Außennormal unterschieden. Die Ausgangssignale $R_{2DT}$ des 2-D- Tasters werden einer Summierstelle 63 zugeführt, der außerdem ein Referenzsignal $R_{Ref}$ zugeführt sein kann. Das Ausgangssignal der Summierstelle 63 ist wiederum einer Anzeigeeinheit 70 in Form eines Bildschirmes zugeführt.

Nachfolgend wird die Funktionsweise der in den Figuren dargestellten Anordnungen näher erläuterd, wobei zunächst auf Figur 2 Bezug genommen wird.

Bei der Durchführung des Kreisformtests gibt der Interpolator 10 eine zuvor über die Steuerung 11 programmierte kreisförmige Sollbahn $R_{NC}$ vor. Zweckmäßig ist die Soll-Kreisbahn $R_{NC}$ so gewählt, daß sie jeweils genau in einer von zwei Achsen aufgespannten Ebene liegt. Bei der Ausführung der Soll-Kreisbahn $R_{NC}$ durch die Maschine sind dann entsprechend nur die die Kreisebene aufspanneneden Maschinenachsen aktiv, während die übrigen Achsen inaktiv sind. Ein solches maschinenangaßtes Vorgehen erleichtert die spätere Auswertung der Ergebnisse. Die Soll-Kreisbahn $R_{NC}$ wird von der Maschine mit konstanter Bahngeschwindigkeit durchfahren. Das Wegmeßsystem 33,43 erfaßt die während der Maschinenbewegung von den Schlitten 32, 42 tatsächlich ausgeführte Istbahn $R_M$, indem es jeweils die Positionen der an der Bewegung beteiligten Schlitten 32,42 erfaßt. Für eine eindeutige Bestimmung einer Position der relativen Schlittenbewegungsbahn bedarf es der Positionen der Schlitten wenigstens zweier Servoregelkreise 30,40,50. Liegt die gefahrene Istbahn $R_M$ nicht genau in einer Ebene bezüglich des Wegmeßsystems 33,43 , müssen zumindest die Schlittenpositionen dreier Servoregelkreise 30,40,50 bekannt sein. Alle erfaßten Positionen der Istbahn $R_M$ werden an die Diagnoseeinheit 20 übermittelt Für jede durch das Lageführungssignal $w_{NC}$ vorgegebene Sollposition, d.h. für jeden Interpolationsschritt des Interpolators 10 ermittelt die Diagnoseeinheit 20 anschließend die Differenz zwischen der Position der Schlitten 32 und 42 zueinander auf der Sollbahn $R_{NC}$ und der zugehörigen vom Wegmeßsystem 40 gemessenen Position auf der Istbahn $R_M$. Diese in der Diagnoseeinheit 20 ermittelte Differenz stellt bereits das Ergebis des Kreisformtests in Form einer Bahnabweichung $\Delta R$ dar, welches auf der Anzeige 70 dargestellt wird.

Zur Vereinfachung der Deutung des erhaltenen Ergebnisses wird der Bahnabweichung $\Delta R$ anschließend zweckmäßig noch ein vorgebbares Referenzsignal $R_{Ref}$ in Form einer Referenzkreisbahn hinzuaddiert bzw. in einer zweiten Ausführung von dieser abgezogen. Auf diese Weise wird eine anschauliche Darstellung der Ergebnisse, die dann auch als Kreise sichtbar sind, gewonnen. Zudem sind Ergebnisse aus verschiedenen Kreisformtests vergleichbar. Wird die in der Diagnoseeinheit 20 gefundene Bahnabweichung $\Delta R$ von der Referenzkreisbahn $R_{Ref}$ subtrahiert, erscheint auf der Anzeige 70 eine zu kleine Ist-Kreisbahn $R_M$ als ein zu großer Kreis, eine zu große Istbahn $R_M$ dagegen als ein zu kleiner Kreis. Damit sind der Anzeige 70 direkt die nötigen Korrekturen entnehmbar. Diese Darstellungsart entspricht einem Kreisformtest nach der in Figur 1 dargestellten Weise mit einer Abtastung am Innennormal. Wird die in der Diagnoseeinheit 20 ermittelte Bahnabweichung $\Delta R$ zu dem Referenzsignal $R_{Ref}$ hinzuaddiert, erscheint ein zu kleiner Kreis in der Anzeige 70 zu klein und ein zu großer Kreis zu groß. In diesem Fall sind der Anzeige 70 direkt die Abweichungen zwischen Soll- und Istbahn zu entnehmen, die Darstellung entspricht einem Kreisformtest nach Figur 1 mit Abtastung am Außennormal. Zur Deutung und Auslegung der Ergebnisse wird nochmals auf eingangs bereits angegebene Schrift von Knapp/Hrovat verwiesen. Die darin beschriebenen Auswerteverfahren können bei dem hier vorgeschlagenen Kreisformtest ebenfalls angewendet werden.

Um die Ablesbarkeit zu erleichtern, werden die Darstellungen auf der Anzeige zweckmäßig durch Skalierung des der Anzeige zugrundeliegenden Koordinatensystems mit einem vorgebbaren Vergrößerungsfaktor $S_V$ vergrößert, geeignete Vergrößerungsfaktoren liegen dabei in der Größenordnung 1000.

Das vorgeschlagene Verfahren zieht zur Durchführung des Kreisformtests nur die im Servoregelkreis ohnehin vorhandenen Informationen über die Istposition des Schlittens und der gewünschten Sollposition heran. Eine Schwierigkeit besteht dabei darin, die vom NC-Interpolator 10 vorgegebenen Sollpositionen und die vom Direktwegmeßsystem 33, 43 gemessenen Istpositionen zur Bildung einer Kreisabweichung richtig zuzuordnen. Infolge des Schleppfehlers, welcher in unterschiedlicher Größe bei allen numerisch gesteuerten Maschinen auftritt, bedingt z.B. schon durch die Ausführung der Lageregler in den Servoregelkreisen als Proportionalregeler, usw, tritt nämlich allgemein der Effekt auf, daß der von der Steuerung vorgegebene Sollwert dem von der Maschine erreichten Istwert voreilt. Dadurch ist wiederum bedingt, daß im Falle einer Kreisbewegung der Radius des von der Maschine tatsächlich abgearbeiteten Istkreises stets kleiner ist als der angestrebte Radius des Sollkreises. Soll- und Istbahn können deshalb nicht durch einfache Auswertung der zu gleichen Zeitpunkten ermittelten Soll- bzw. Istpositionen verglichen werden.

Das durch den Schleppfehler bedingte Zuordnungsproblem ist in Figur 3 bildlich dargestellt. $R_{NC}$ bezeichnet die Soll-Kreisbahn, welche bedingt durch die digitale Arbeitsweise der Maschine durch eine Folge von Sollpositionen, in der Figur 3 als Minutenstriche angedeutet, als Polygonzug angenähert ist, $R_N$ bezeichnet die vom Wegmeßsystem 33, 43 erfaßte Istkreisbahn, die im Beispiel der Figur 3 im Uhrzeigersinn durchlaufen werden soll. Dargestellt ist eine durch beliebige zwei orthogonale Achsen aufgespannte x-y-Ebene. Zum Zeitpunkt $t_1$ wird die Sollposition $x_1, y_1$ von der Steuerung vorgegeben. Infolge des Schleppfehlers befindet sich die Maschine zu dem selben Zeitpunkt $t_1$ tatsächlich an der Position $x_{M1}, y_{M1}$.

Aus Figur 3 ist erkennbar, daß ein Vergleich zwischen Soll- und Istposition zu einem festen Zeitpunkt $t_1$ eine Aussage über das Maschinenverhalten nicht liefern könnte, da die zum Zeitpunkt $t_1$ vorliegende scheinbare Bahnabweichung $\Delta R$ nicht mit der zu diesem Zeitpunkt wirklich vorliegenden Bahnabweichung $\Delta R$ übereinstimmt.

Das vorgeschlagene Verfahren eignet sich deshalb besonders für Maschinen, deren Steuerungen eine Vorsteuereinrichtung 12 beinhalten. Da es Ziel der Vorsteuerung ist, Schleppfehler zu vermeiden, stimmen bei Steuerungen dieser Art Soll- und Istposition bei einer Kreisbewegung im allgemeinen überein.

Allerdings kann auch eine Vorsteuerung den dynamisch bedingten Schleppfehler zwar deutlich verringern, ihn aber nie ideal zu Null machen. Ferner sind Anwendungen denkbar, in denen eine Vorsteuerung nicht möglich oder unerwünscht ist.

Ein andere Möglichkeit, das Zuordnungsproblem zu lösen, besteht deshalb darin, den vorgeschlagenen Kreisformtest zunächst ohne Korrekturen auszuführen, die gewonnenen Ergebnisse dann aber unter nachträglicher mathematischer Berücksichtigung des Schleppabstandes auszuwerten. Ein Verfahren dieser Art ist in Figur 4 dargstellt. Zunächst, Schritt 21, durchfährt die NC-Maschine eine vorgegebene Sollkreisbahn $R_{NC}$. Sollpositionen $w_{NC}$ und gemessene Istpositionen $x_M$ werden achsweise abgespeichert, wobei Sollpositionen $w_{NC}$ und gemessene Istpositionen $x_M$ jeweils zu gleichen Zeiten erfaßt werden.

Aus den im ersten Schritt 21 abgespeicherten Positionswerten werden den Istpositionen $x_M$ in Schritt 22 für zwei ein kartesisches Koordinatensystem aufspannende Achsen j neue korrigierte Lagesollwerte $w_{NC}$ wie folgt zugeordnet :

$$(1) \qquad w_{NCi}^{(neu)} = R_{NC}\sqrt{(x_{M1}\text{-}x_{M2})}\cdot X_{Mj\,j\,=\,1,2}$$

Mit den neuen Lagesollwerten $w_{NC}$ wird im nächsten Schritt 23 für jede Istposition die zu einem Zeitpunkt $t_1$ tatsächlich an der NC-Maschine auftretende Bahnabweichung R, wie folgt bestimmt:

$$(2) \qquad \Delta R = \sqrt{(w_{NC1}\text{-}x_{M1})^2 + (w_{NC2}\text{-}x_{M2})^2}.$$

Zur besseren Veranschaulichung des Ergebnisses wird die nach Gleichung 2 gefundene Bahnabweichung wiederum zweckmäßig einem Referenzsignal $R_{Ref}$ in Form eines Referenzkreises aufaddiert bzw. von diesem subtrahiert. In Schritt 24 werden deshalb z.B. durch interaktive Eingabe das Referenzsignal $R_{Ref}$ sowie die gewünschte Darstellung im Innen- Außennormal festgelegt. Die zur punktweisen

Darstellung bezüglich eines kartesischen Koordinatensystems auf der Anzeige 70 benötigten Achskomponenten werden damit wie folgt berechnet:

$$(3) \qquad \text{für das Innennormal: } x_{Dj} = x_{Mj} - (1 - R_R/R_{NC})\, w_{NCj;}^{(neu)} \quad j = 1,2$$

$$(4) \qquad \text{für das Außennormal: } x_{Dj} = (1 + R_R/R_{NC})\, w_{NCj}^{(neu)} - x_{Mj}; \quad j = 1,2$$

Im nachfolgenden Schritt 25 erfolgt die Vergrößerung der gefundenen Bahnabweichungen $\Delta R$. Dies geschieht durch Festlegen eines Skalierungsfaktors, wiederum z.B. interaktiv, zur Skalierung des der anschließenden Anzeige auf dem Bildschirm 70 zugrunde liegenden Koordinationsystems.

Anschließend wird mit den gemäß Gleichungen (3) oder (4) ermittelten Achskomponenten die Bahnabweichung $\Delta R$ auf der Anzeige 70 wie folgt dargestellt:

$$(5) \qquad \Delta R = \sqrt{x_{D1}^2 \text{-} x_{D2}^2} = (R_R \pm R_{NC} - R_{IST})$$

wobei Minuszeichen für das Innennormal und Pluszeichen für das Außennormal gilt und

$$(6) \qquad \Delta R_{IST} = \sqrt{x_{M1}^2 \text{-} x_{M2}^2}$$

Das gesamte Diagnoseverfahren wird in der Diagnoseeinrichtung 20 durchgeführt, die sowohl in der numerischen Steuerung selbst wie auch in einem externen Gerät realisiert sein kann.

Durch den vorgeschlagenen Kreisformtest wird, mit Hilfe des ohnehin vorhandenen Wegmeßsystems die Arbeitsgenauigkeit der Servoregelkreise selbst geprüft. Nicht erfaßt werden solche mechanisch bedingten Ungenauigkeiten, die von der nicht zum Servoregelkreis gehörenden, externen Mechanik der Maschine, z. B. einer Werkzeughalterung, verursacht werden.

In Fällen, wo ein zusätzliches Interesse am Einfluß der außerhalb der Servoregelkreise 30, 40, 50 liegenden Mechanik 65 auf die Arbeitsgenauigkeit der Maschine besteht, ist es zweckmäßig, den erfindungsgemäß vorgeschlagenen Kreisformtest in Verbindung mit einem bekannten, mechanischen Kreisformtestverfahren, z.B. dem nach Knapp/Hrovat, durchzuführen. Letzterer schließt, wie in Figur 1 gezeigt, die externe Mechanik 65 mit ein. Durch einfachen Vergleich beider Testverfahren können deshalb Aussagen über die externe Mechanik gewonnen werden. Die Durchführung beider Kreisformtestverfahren erfolgt zweckmäßig nacheinander, zum Zwecke des Besipiels sei angenommen, daß zuerst ein Test nach dem erfindungsgemäßen Verfahren durchgeführt worden sei. Für das zweite Verfahren wird auf einem der Schlitten, in der Regel an der Spindel, der 2-D-Meßtaster befestigt. Anschließend führt die Maschine wiederum dieselbe programmierte Kreisbahnbewegung $R_{NC}$ aus, die sie schon im Rahmen des vorher durchgeführten erfindungsgemäßen Kreisformtests ausgeführt hat. Die Kreisbahn $R_{NC}$ stimmt überein mit der Außenkontur des Kreisnormals 62. An dieser Außenkontur liegt während der Maschinenbewegung der Meßtaster 61 an, der sich somit auf einer durch das Kreisnormal 62 definierten Kreisbahn bewegt. Während der Maschinenbewegung erfaßt der 2-D-Taster die relativen Bewegungen zwischen Tastkopf 60 und Meßtaster 61 und setzt sie in ein Ausgangssignal um. Da der Tastkopf 60 entlang der Istbahn, der Meßtaster 61 entlang der Sollkreisbahn, dem Kreisnormal 62, geführt wird, entspricht dieses Ausgangssignal der Kreisabweichung R. ein Signal $R_{KN}$, welche in der Summierstelle 63 voneinander subtrahiert werden. $\Delta R$ wird wiederum zweckmäßig auf dem Bildschirm 70 dargestellt. Zum besseren Verständis kann dem Signal $\Delta R$ wieder, wie schon in der Beschreibung des erfindungsgemäßen Kreisformtests vorgeschlagen, ein Referenzsignal $R_{Ref}$ in Form einer Referenzkreisbahn hinzuaddiert bzw. von dieser subtrahiert werden.

Zweckmäßig erfolgt die Bedienung der Diagnoseeinheit 20 mittels eines softwaremäßig realisierten Diagnosemenüs, welches insbesondere das Einstellen neuer Sollradien z.B. $R_{NC}$, anderer Referenzradien z.B. $R_{Ref}$, anderer Vergrößerungsfaktoren sowie Änderung des Drehsinns der Kreisbewegung und Vorgabe neuer Kreisbahngeschwindigkeiten gestattet. Vorteilhaft ist ferner die Auswertung der mit dem Kreisformtest erhaltenen Ergebnisse softwaremäßig in der Diagnoseeinheit realisiert. Ausgewertet werden können z.B. die Kreisformabweichung, die Kreisabweichung, die Durchmesserabweichung sowie Umkehrspannen.

## Patentansprüche

1. Verfahren zur Überprüfung der Arbeitsgenauigkeit einer NC-Maschine durch Vergleich einer kreisförmigen Sollbahn ($R_{NC}$) mit einer die tatsächliche Maschinenbewegung beschreibenden Ist-Kreisbahn ($R_M$) für eine wenigstens zweiachsige NC-Maschine mit wenigstens zwei Servoregelkreisen (30, 40), die jeweils einen Achsantrieb (31, 41) zur Führung eines Schlittens (32, 42) gemäß einem die Sollbewegungsbahn ($R_{NC}$) beschreibenden Lage-Führungssignal ($w_{NC}$), sowie ein Wegmeßsystem (33, 43) zur Erfassung und Rückführung der Position des Schlittens (31, 41) aufweisen, wobei die Ist-Kreisbahn ($R_M$) aus den vom Wegmeßsystem (33, 43) gelieferten Positionssignalen ($x_M$) gebildet wird, dadurch gekennzeichnet, daß das den Servoregelkreisen (30, 40) zugeführte Lageführungssignal ($w_{NC}$) geschwindigkeitsvorgesteuert wird um zu bewirken, daß sich die zu einer Sollposition ($x_1$, $y_1$) gehörende Istposition ($x_{M1}$, $x_{M2}$) zeitgleich mit dieser einstellt, und daß jeweils zu gleichen Zeitpunkten erfaßte Soll- und Istpositionssignale miteinander verglichen werden.

2. Verfahren nach Anspruch 1, dadurch gekennzeichnet, daß das Lage-Führungssignal ($w_{NC}$) zusätzlich beschleunigungsvorgesteuert wird.

3. Verfahren nach Anspruch 1, dadurch gekennzeichnet, daß das Ausgangssignal ($x_M$) des Wegmeßsystems (33, 43) vom Ausgangssignal ($w_{NC}$) des Interpolators (10) subtrahiert wird, das Ergebnis anschließend von einem Referenzsignal ($R_{ref}$) subtrahiert und auf einem Bildschirm (70) zur Anzeige gebracht wird.

4. Verfahren nach Anspruch 1, dadurch gekennzeichnet, daß das Ausgangssignal ($x_M$) des Wegmeßsystems (33, 43) vom Ausgangssignal ($w_{NC}$) des Interpolators (10) subtrahiert wird, das Ergebnis anschließend einem Referenzsignal ($R_{Ref}$) aufaddiert und auf einem Bildschirm (70) zur Anzeige gebracht wird.

5. Verfahren nach Anspruch 3 oder 4, dadurch gekennzeichnet, daß das Referenzsignal ($R_{Ref}$) eine Kreisbahn mit vorgebbarem Radius ist.

6. Verfahren zur Überprüfung der Arbeitsgenauigkeit einer NC-Maschine durch Vergleich einer kreisförmigen Sollbahn ($R_{NC}$) mit einer die tatsächliche Maschinenbewegung beschreibenden Ist-Kreisbahn ($R_M$) für eine wenigstens zweiachsige NC-Maschine mit wenigstens zwei Servoregelkreisen (30, 40), die jeweils einen Achsantrieb (31, 41) zur Führung eines Schlittens (32, 42) gemäß einem die Sollbewegungsbahn ($R_{NC}$) beschreibenden Lage-Führungssignal ($W_{NC}$), sowie ein Wegmeßsystem (33, 43) zur Erfassung und Rückführung der Position des Schlittens (31, 41) aufweisen, wobei die Ist-Kreisbahn ($R_M$) aus den vom Wegmeßsystem (33, 43) gelieferten Positionssignalen ($x_M$) gebildet wird, dadurch gekennzeichnet, daß in einem ersten Schritt (21) die zu gleichen Zeitpunkten ($t_1$) gegebenen Werte für die Sollposition und für die vom Wegmeßsystem gemessene Istposition ($X_M$) erfaßt werden, und daß in einem zweiten Schritt (22) aus diesen Werten unter mathematischer Berücksichtigung des Schleppabstandes die die Istposition bestimmenden Sollpositionen ermittelt werden.

**Claims**

1. Method for testing the operational accuracy of an NC machine by comparing a circular desired path ($R_{NC}$) with an actual circular path ($R_M$), which describes the actual machine movement, for an NC machine having at least two axes and at least two servo-control circuits (30, 40), which each have an axle drive (31, 41) for guiding a slide (32, 42) in accordance with the position guidance signal ($w_{NC}$) describing the desired movement path ($R_{NC}$), as well as a displacement-measuring system (33, 43) for detecting and feeding back the position of the slide (31, 41), the actual circular path ($R_M$) being formed from the position signals ($x_M$) supplied by the displacement-measuring system (33, 43), characterized in that the position guidance signal ($w_{NC}$) fed to the servo-control circuits (30, 40) is subjected to velocity precontrol so that the actual position ($x_{M1}$, $x_{M2}$) associated with a desired position ($x_1$, $y_1$) is assumed simultaneously therewith, and in that desired and actual position signals each detected at the same instant are compared with one another.

2. Method according to Claim 1, characterized in that the position guidance signal ($w_{NC}$) is additionally subjected to acceleration precontrol.

3. Method according to Claim 1, characterized in that the output signal ($x_M$) of the displacement measuring system (33, 43) is subtracted from the output signal ($w_{NC}$) of the interpolator (10), and the result is subsequently subtracted from a reference signal ($R_{Ref}$) and displayed on a screen (70).

4. Method according to Claim 1, characterized in that the output signal ($x_M$) of the displacement measuring system (33, 43) is subtracted from the output signal ($w_{NC}$) of the interpolator (10), and the result is subsequently added to a reference signal ($R_{Ref}$) and displayed on a screen (70).

5. Method according to Claim 3 or 4, characterized in that the reference signal ($R_{Ref}$) is a circular path with a prescribable radius.

6. Method for testing the operational accuracy of an NC machine by comparing a circular desired path ($R_{NC}$) with an actual circular path ($R_M$), which describes the actual machine movement, for an NC machine having at least two axes and at least two servo-control circuits (30, 40), which each have an axle drive (31, 41) for guiding a slide (32, 42) in accordance with a position guidance signal ($w_{NC}$) describing the desired movement path ($R_{NC}$) as well as a displacement-measuring system (33, 43) for detecting and feeding back the position of the slide (31, 41), the actual circular path ($R_M$) being formed from the position signals ($X_M$) supplied by the displacement-measuring system (33, 43), characterized in that, in a first step (21), the values given at the same instance ($t_1$) for the desired position and for the actual position ($x_M$) measured by the displacement measuring system are detected, and in that, in a second step (22), the desired positions determining the actual position are determined from these values taking account mathematically of the following error.

**Revendications**

1. Procédé permettant de vérifier la précision du fonctionnement d'une machine à commande numérique par comparaison à une piste de consigne de forme circulaire ($R_{NC}$) avec une piste réelle de forme circulaire décrivant le mouvement effectif de la machine pour une machine à commande numérique à au moins deux axes avec au moins deux boucles d'asservissement (30, 40), qui présentent respectivement un mécanisme d'entraînement (31, 41) pour guider un chariot (32, 42) selon un signal de guidage ($W_{NC}$) de position décrivant la piste du mouvement de consigne ($R_{NC}$), ainsi qu'un système de mesure de déplacement (33, 43) servant à détecter et à remettre le chariot en position (31, 41), la piste circulaire réelle ($R_M$) étant fermée à partir des signaux de position ($x_M$) délivrés par le système de mesure (33, 43) de déplacement,
caractérisé en ce que
le signal de guidage ($W_{NC}$) de position, amené aux boucles d'asservissement (30, 40), a sa vitesse précommandée pour faire en sorte que la position réelle ($x_{M1}$, $x_{M2}$) faisant partie d'une position de consigne ($x_1$, $y_1$) soit réglée en même temps que celle-ci et que les signaux de position de consigne et de position réelle détectés aux mêmes instants soient comparés les uns avec les autres.

**2.** Procédé selon la revendication 1,
caractérisé en ce que
le signal de guidage de position ($W_{NC}$) a en outre son accélération précommandée.

**3.** Procédé selon la revendication 1,
caractérisé en ce que
le signal de sortie ($x_M$) du système de mesure (33, 43) de déplacement est soustrait du signal de sortie ($W_{NC}$) de l'interpolateur (10), le résultat est soustrait ensuite d'un signal de référence ($R_{ref}$) et est affiché sur un écran d'affichage (70).

**4.** Procédé selon la revendication 1,
caractérisé en ce que
le signal de sortie ($x_M$) du système de mesure (33, 43) de déplacement est soustrait du signal de sortie ($W_{NC}$) de l'interpolateur (10), en ce qu'on additionne ensuite le résultat à un signal de référence ($R_{ref}$) et en ce qu'on l'affiche sur un écran d'affichage (70).

**5.** Procédé selon la revendication 3 ou 4,
caractérisé en ce que
le signal de référence ($R_{ref}$) est une piste circulaire d'un rayon que l'on peut définir au préalable.

**6.** Procédé permettant de vérifier la précision du fonctionnement d'une machine à commande numérique par comparaison à une piste de consigne de forme circulaire ($R_{NC}$) avec une piste réelle de forme circulaire décrivant le mouvement effectif de la machine pour une machine à commande numérique à au moins deux axes avec au moins deux boucles d'asservissement (30, 40), qui présentent respectivement un mécanisme d'entraînement (31, 41) pour guider un chariot (32, 42) selon un signal de guidage ($W_{NC}$) de position décrivant la piste du mouvement de consigne ($R_{NC}$), ainsi qu'un système de mesure de déplacement (33, 43) servant à détecter et à remettre le chariot en position (31, 41), la piste circulaire réelle ($R_M$) étant formée à partir des signaux de position ($x_M$) délivrés par le système de mesure (33, 43) de déplacement,
caractérisé en ce que
l'on détecte lors d'une première séquence (21) les valeurs que l'on a aux mêmes instants ($t_1$) pour la position de consigne et pour la position réelle ($X_M$), mesurée par le système de mesure ($X_M$) de déplacement, en ce que lors d'une deuxième séquence (22) on détecte à partir de ces valeurs des positions de consigne déterminant la position réelle en prenant mathématiquement considération de la distance d'entraînement.

10
31,41
32,42
65
33,43
60
61
62
63
R_{20T}
R_{Ref}
70

Fig. 1

Fig.2

$(x_{M1}, y_{M1}, t_1)$

$R_{NC}$

$\Delta R$

$(x_1, y_1, t_1)$

$R_M$

$Y$

$X$

_Fig. 3_

$x_{Soll}, x_{Mi} (t_i)$

$(neu)$
$x_{Soll}, x_{Mi}$

$\Delta R \quad (2)$

$R_{Ref} \longrightarrow (3), (4)$

$S_V \longrightarrow S_V$

_Fig. 4_